(19) **Europäisches Patentamt / European Patent Office / Office européen des brevets**

(11) **EP 4 172 407 B1**

(12) **FASCICULE DE BREVET EUROPEEN**

(45) Date de publication et mention de la délivrance du brevet:
**31.07.2024 Bulletin 2024/31**

(21) Numéro de dépôt: **21740136.3**

(22) Date de dépôt: **18.06.2021**

(51) Classification Internationale des Brevets (IPC):
**D07B 1/06** *(2006.01)*

(52) Classification Coopérative des Brevets (CPC):
(C-Sets disponibles)
**D07B 1/0613; B60C 9/0007; B60C 9/2006; D07B 1/0633;** B60C 2009/0071; B60C 2009/0092; B60C 2009/0466; B60C 2009/2096; B60C 2200/06; B60C 2200/065; B60C 2200/08; B60C 2200/14; D07B 1/0626; D07B 2201/1044; D07B 2201/1048;

(Cont.)

(86) Numéro de dépôt international:
**PCT/FR2021/051106**

(87) Numéro de publication internationale:
**WO 2021/260303 (30.12.2021 Gazette 2021/52)**

(54) **CÂBLE MULTI-TORONS À DEUX COUCHES À ENDURANCE SOUS FLEXION AMÉLIORÉE**

ZWEISCHICHTIGES MEHRADRIGES KABEL MIT VERBESSERTER BIEGEFESTIGKEIT

DOUBLE-LAYER MULTI-STRAND CABLE HAVING IMPROVED BENDING ENDURANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2020 FR 2006605**

(43) Date de publication de la demande:
**03.05.2023 Bulletin 2023/18**

(73) Titulaire: **COMPAGNIE GENERALE DES ETABLISSEMENTS MICHELIN**
**63000 Clermont-Ferrand (FR)**

(72) Inventeurs:
- **CHEVALLEY, Marianna**
  **63040 Clermont-Ferrand Cedex 9 (FR)**
- **BARBAT, Romain**
  **63040 Clermont-Ferrand Cedex 9 (FR)**
- **GIANETTI, Alexandre**
  **63040 Clermont-Ferrand Cedex 9 (FR)**
- **LAURENT, Stéphane**
  **63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2018/115727     WO-A1-2019/122721**
**WO-A1-2019/243691**

(52) Classification Coopérative des Brevets (CPC):
(Cont.)
D07B 2201/1052; D07B 2201/1076;
D07B 2201/2025; D07B 2201/2029;
D07B 2201/203; D07B 2201/2031;
D07B 2201/2059; D07B 2201/2061;
D07B 2207/4072; D07B 2401/206; D07B 2401/208

C-Sets
D07B 2201/2059, D07B 2801/12;
D07B 2201/2061, D07B 2801/12, D07B 2801/24

**Description**

L'invention concerne des câbles, un produit renforcé du type bandage non pneumatique, une bande transporteuse ou une chenille et un pneumatique comprenant ces câbles. On connaît de l'état de la technique, un pneumatique pour véhicule de génie civil à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend plusieurs nappes renforcées par des éléments de renforts tels que des câbles métalliques, les câbles d'une nappe étant noyés dans une matrice élastomérique de la nappe.

L'armature de sommet comprend une armature de travail, une armature de protection et éventuellement d'autres armatures, par exemple une armature de frettage.

L'armature de carcasse comprend, quant à elle, au moins une nappe élastomérique, dite de carcasse, renforcée par des éléments de renfort tels que des câbles métalliques. On connaît de l'état de la technique un élément de renfort de nappe de carcasse comprenant un câble métallique multi-torons à deux couches. Parmi les câbles couramment utilisés, on connaît les câbles de structure dite « 189.23 » et les câbles de structure dite « 68.23 ».

Un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet et parfois de l'armature de carcasse ce qui réduit considérablement la durée de vie du pneumatique.

On connaît également de l'état de la technique des câbles multi-torons à deux couches à pénétrabilité améliorée tels que décrits dans WO2018115727.

Concernant l'armature de carcasse, les inventeurs à l'origine de l'invention ont identifié que le besoin majeur pour l'armature de carcasse est l'endurance sous forte charge, il est donc important de concevoir des câbles avec un haut niveau de force rupture, une faible rigidité de flexion et une très bonne pénétration par le mélange élastomérique.

Or les câbles de l'état de la technique sont connus pour être très peu pénétrables par le mélange élastomérique ce qui les rend moins endurants sous un environnement corrosif. Une solution pour augmenter la durée de vie du pneumatique est de lutter contre l'action des agents corrosifs au sein de chaque toron. On peut ainsi prévoir de recouvrir de gomme chaque couche interne et intermédiaire de chaque toron lors du procédé de fabrication du câble. Lors de ce procédé, la gomme déposée pénètre dans les capillaires présents entre chaque couche de chaque toron et empêche ainsi la propagation des agents corrosifs. De tels câbles, généralement appelés câbles gommés in situ, sont bien connus de l'état de la technique. Toutefois, le procédé de fabrication de ces câbles gommé in situ requiert une maîtrise de nombreuses contraintes industrielles pour éviter notamment le débordement de la gomme à la périphérie de chaque toron.

Une autre solution pour augmenter la durée de vie du pneumatique est d'augmenter la force à rupture des câbles de l'état de la technique. Généralement, on augmente la force à rupture en augmentant le diamètre des fils constituant le câble et/ou le nombre de fils et/ou la résistance unitaire de chaque fil. Toutefois, augmenter davantage le diamètre des fils, par exemple au-delà de 0,50 mm, entraine nécessairement une baisse de la flexibilité du câble ce qui n'est pas souhaitable pour un câble utilisé dans l'armature de carcasse. Augmenter le nombre de fils entraine la plupart du temps une baisse de la pénétrabilité des torons par le mélange élastomérique. Augmenter la résistance unitaire de chaque fil nécessite des investissements importants dans les installations de fabrication des fils.

L'invention a pour but un câble présentant une endurance sous flexion améliorée par rapport aux câbles de l'état de la technique tout en évitant les désavantages précités.

A cet effet l'invention a pour objet un câble multi-torons à deux couches selon la revendication 1.

D'une part, grâce à son critère d'endurance sous flexion relativement bas, le câble selon l'invention permet de réduire les niveaux de contraintes dans le câble soumis à une sollicitation de flexion et donc d'allonger la durée de vie du pneumatique. En effet, les inventeurs à l'origine de l'invention ont découvert que le premier critère déterminant pour améliorer les performances d'endurance d'un câble sous environnement corrosif n'était pas uniquement la force à rupture comme cela est largement enseigné dans l'état de la technique mais le critère d'endurance sous flexion représentée dans la présente demande par un indicateur égal à la valeur maximale entre :

- la contrainte de flexion par unité de courbure vue par les fils internes des torons internes et externes et vue par les fils intermédiaires des torons externes divisé par le coefficient de pénétrabilité du câble ; ou
la contrainte de flexion par unité de courbure vue par les fils externes des torons internes et externes divisé par le coefficient de pénétrabilité du câble et par le coefficient de rendement du câble.

D'une part, les inventeurs à l'origine de l'invention émettent l'hypothèse que plus les surfaces de contacts inter-fils sont élevées et plus particulièrement dans les zones inter-torons qui sont les plus sollicitantes c'est-à-dire plus on a de surface de contact entre les fils métalliques externes du toron interne et les fils métalliques externes des torons externes, plus on dilue l'effort de fragilisation sur le nombre de contacts. Afin d'optimiser ces contacts, les inventeurs à l'origine de l'invention émettent l'hypothèse qu'il est nécessaire d'avoir moins de contraintes dues à la tension dans le câble à iso effort ou d'avoir de bonnes propriétés géométriques du contact et plus précisément de l'angle de contact entre les fils métalliques externes du toron interne et les fils métalliques externes des torons externes afin d'augmenter les surfaces de contacts. A une tension donnée, le coefficient de rendement permet de prendre en compte la perte de rendement du câble en traction dû à la fragilisation transverse dans les contacts inter-fils au niveau des fils métalliques externes de la couche interne et de la couche externe. Ce coefficient de rendement dépend du nombre de fils métalliques externes de la couche interne, de l'angle de contact entre les fils métalliques externes du toron interne et les fils métalliques externes des torons externes, des diamètres $d_3$ et $d_3'$ respectivement des fils métalliques externes de la couche interne et des fils métalliques externes de la couche externe, de l'angle d'hélice d'un toron externe et de la force à rupture d'un toron externe. Ainsi un câble solide aura un coefficient de rendement proche de 1 et un câble fragilisé aura un coefficient de rendement non optimal, plutôt proche de 0,5.

Et, d'autre part, grâce à son critère d'encombrement suffisamment élevé, le câble selon l'invention permet d'avoir un maximum de masse métal sur une surface la plus petite possible permettant de participer à l'amélioration de l'endurance sous flexion. En effet, les inventeurs à l'origine de l'invention ont découvert que le deuxième critère déterminant pour améliorer les performances d'endurance d'un câble sous environnement corrosif n'était pas uniquement la force à rupture comme cela est largement enseigné dans l'état de la technique mais le critère encombrement représenté dans la présente demande par un indicateur égal à la surface compactée du câble divisée par la surface d'encombrement du câble.

En effet, les câbles de l'état de la technique présentent soit un critère d'endurance sous flexion relativement faible mais un critère d'encombrement non optimal, soit un critère d'encombrement optimal, c'est-à-dire au-delà de 0,46 mais un critère d'endurance sous flexion relativement élevé. Le câble selon l'invention, du fait de son coefficient de rendement relativement élévé et de pénétrabilité relativement élevé présente un critère d'endurance relativement faible ainsi qu'un critère d'encombrement relativement élevé permettant ainsi une endurance sous flexion améliorée.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par définition, le diamètre d'un toron est le diamètre du plus petit cercle dans lequel est circonscrit le toron.

Avantageusement, le diamètre du câble est le diamètre du plus petit cercle dans lequel est circonscrit le câble sans la frette. De façon préférée, le câble présente un diamètre D tel que D ≤ 6,0 mm, de préférence tel que 2,0 mm≤ D ≤ 5,5 mm. Le diamètre D est mesuré sur le câble selon la norme ASTM D2969-04.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux.

Dans un mode de réalisation, le toron interne du câble est entouré d'une composition polymérique puis de la couche externe.

Avantageusement, le toron interne est à couches cylindriques.

Avantageusement, chaque toron externe est à couches cylindriques.

De façon très avantageuse, le toron interne et chaque toron externe sont à couches cylindriques. On rappelle que de telles couches cylindriques sont obtenues lorsque les différentes couches d'un toron sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques qui présente une pénétrabilité bien plus faible.

Le toron interne est à deux couches. Le toron interne comprend un assemblage de fils constitué de deux couches de fils, ni plus ni moins, c'est-à-dire que l'assemblage de fils a deux couches de fils, pas une, pas trois, mais uniquement deux.

Le toron externe est à trois couches. Le toron externe comprend un assemblage de fils constitué de trois couches de fils, ni plus ni moins, c'est-à-dire que l'assemblage de fils a trois couches de fils, pas deux, pas quatre, mais uniquement trois.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

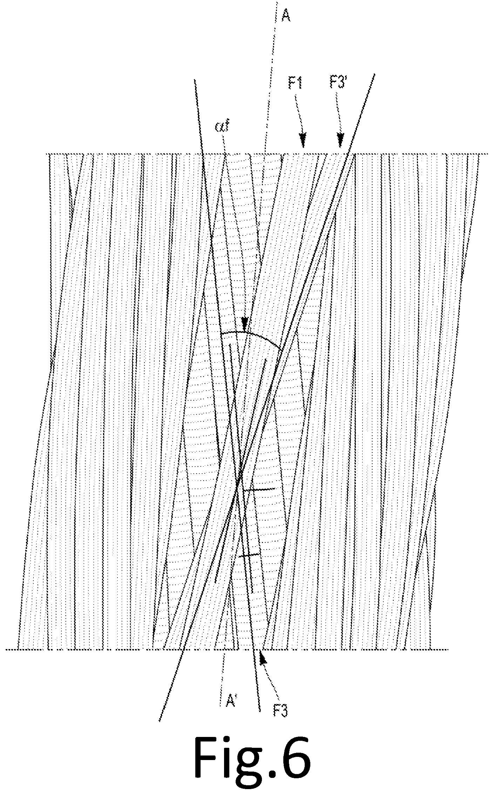

L'angle de contact entre les fils métalliques externes du toron interne et les fils métalliques externes des torons externes est l'angle αf représenté sur la figure 6. Sur cette représentation schématique du câble selon l'invention, on a représenté l'axe A-A' du câble autour duquel la couche interne du câble et la couche externe du câble sont enroulées. Dans cette représentation, on a gardé seulement un fil métallique de la couche externe du toron interne et un fil métallique de la couche externe du toron externe pour mieux visualiser l'angle αf qui est l'angle de contact entre le fil métallique externe du toron interne et le fil métallique externe du toron externe. C'est un des paramètres pertinents pour déterminer le coefficient de fragilisation du câble car plus l'angle de contact est faible moins la fragilisation du câble est importante.

L'angle d'hélice de chaque toron externe αt est une grandeur bien connue de l'homme du métier et peut être déterminé par le calcul suivant : tan αt = 2xπ × $Re_{TE}$/pe, formule dans laquelle pe est le pas exprimé en millimètres suivant lequel chaque toron externe est enroulé, $Re_{TE}$ est le rayon d'hélice de chaque toron externe exprimé en millimètres, et tan désigne la fonction tangente. αt est exprimé en degrés.

Par définition, le rayon d'hélice Re de la couche externe du câble est le rayon du cercle théorique passant par les centres des torons externes de la couche externe dans un plan perpendiculaire à l'axe du câble.

Par définition, la distance inter-torons E de la couche externe de torons externes est définie, sur une section du câble perpendiculaire à l'axe principal du câble, comme la distance la plus courte qui sépare, en moyenne, les enveloppes circulaires dans lesquelles sont inscrits deux torons externes adjacents.

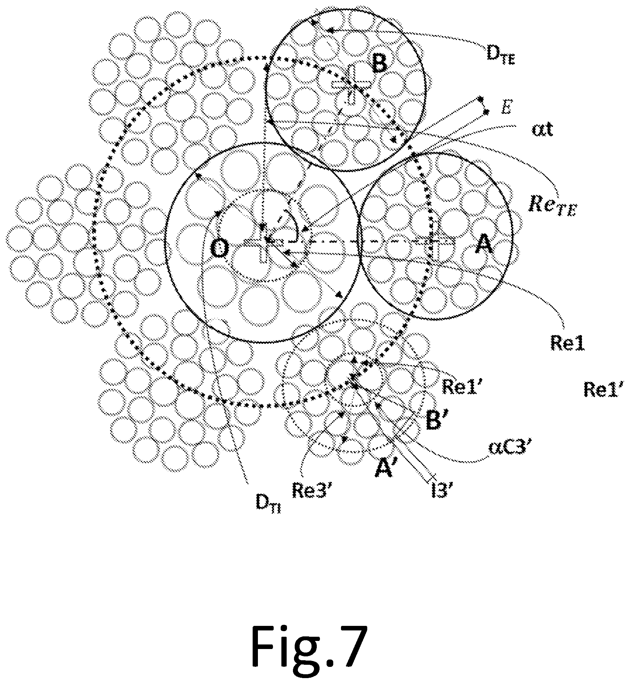

La distance inter-torons E est la distance entre les 2 centres de 2 torons externes adjacents, les points A et B tels que présentés sur la figure 7, moins le diamètre du toron externe.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre », on entend que les fils ou les torons ont le même diamètre aux tolérances industrielles près.

Pour cela, en se plaçant dans un repère 2D orthonormal, c'est-à-dire en suivant la coupe transverse du câble, en prenant OApour la direction de l'axe des abcisses avec O le centre du câble et dans le cas où les torons externes présentent tous sensiblement le même diamètre, on calcule les coordonnées des centres de 2 torons A et B :

$$A = [Re_{TE}, 0]$$

$$B = \left[ Re_{TE} \times \cos\left(\frac{2\pi}{L}\right); \; Re_{TE} \times \sin\left(\frac{2\pi}{L}\right) \right]$$

avec L, le nombre de torons externes, $Re_{TE}$ le rayon d'hélice de chaque toron externe exprimé en millimètres.

Le rayon d'hélice de chaque toron externe est calculé selon la formule suivante :
$Re_{TE} = max(Re\_min_{TE} ; Re\ TE_{insaturé})$ avec :
Re minTE est le rayon d'enroulement qu'on obtient en cas de sursaturation de la couche.

C'est le rayon minimum pour que tous les torons soient en contact,

$$Re\_min_{Te} = \frac{1}{\left( \frac{\frac{sin^2\left(\frac{\pi}{L}\right)}{\left(\frac{D_{TE}}{2}\right)^2} - cos^2\left(\frac{\pi}{L}\right) * \left(\frac{2\pi}{pe}\right)^2}{} \right)^{1/2}},$$

avec
L : le nombre de torons externes, pe est le pas exprimé en millimètres dans lequel chaque toron externe est enroulé et $D_{TE}$ : le diamètre du toron externe en mm, et Re $_{TE\ insaturé}$ correspond à une architecture insaturée ou strictement saturée,

$$Re\_TE_{insaturé} = \frac{D_{TI}}{2} + \frac{D_{TE}}{2}$$

avec $D_{TI}$ : le diamètre du toron interne en mm et $D_{TE}$ : le diamètre du toron externe en mm.

Le diamètre du toron externe est calculé comme suit :

$$\mathrm{D_{TE}}=2 \text{ x } \mathrm{Re}1' + \mathrm{d}1' + 2 \text{ x } \mathrm{d}2' + 2 \text{ x } \mathrm{d}3'$$

avec Re1' est le rayon d'enroulement de la couche interne du toron externe, avec :

- si la couche interne du toron externe contient 1 seul fil métallique interne: *Re*1' = 0 ;
- Sinon,

$$Re1' = \cfrac{1}{\left( \cfrac{sin^2\left(\frac{\pi}{Q'}\right)}{\left(\frac{d_{1'}}{2}\right)^2} - cos^2\left(\frac{\pi}{Q'}\right) * \left(\frac{2\pi}{p1'}\right)^2 \right)^{1/2}}$$

avec
Q' : le nombre de fils métalliques de la couche interne du toron externe, d1 : le diamètre des fils métalliques de la couche interne du toron externe en mm et le pas p1' est le pas de la couche interne du toron externe en mm.

Ensuite on calcule la distance AB dans un repère selon la formule suivante :

$$AB = \sqrt{((xb - xa)^2 + (yb - ya)^2)}$$

On trouve ensuite la distance intertorons en μm :

$$E = AB - \frac{D_{TE}}{\cos(\alpha_t)} * 1000$$

avec

- $D_{TE}$ le diamètre du toron externe
- $\alpha_t = \text{atan}\left(\frac{2\pi * Re_{TE}}{pe}\right)$ l'angle d'hélice du toron externe, avec pe est le pas exprimé en millimètres suivant lequel chaque toron externe est enroulé.

Par définition, la distance interfils d'une couche est définie, sur une section du câble perpendiculaire à l'axe principal du câble, comme la distance la plus courte qui sépare, en moyenne, deux fils adjacents de la couche.

La distance interfils de la couche externe est calculée comme suit. On calcule le rayon d'enroulement des couches externes des torons externes : $Re_{3'} = Re_{1'} + \frac{d1}{2} + d2 + \frac{d3}{2}$ avec Re1' est le rayon d'enroulement de la couche interne du toron externe tel que défini précédemment.

La distance interfils I3' est la distance entre 2 centres de fils métalliques externes moins le diamètre fil telle que présentée sur la figure 7, le mode de calcul est le même que celui pour les torons externes :

$$A' = [ Re_{3'}, 0]$$

$$B' = \left[ Re_{3'} \text{x} \cos\left(\frac{2\pi}{N'}\right) ; \ Re3' \text{x} \sin\left(\frac{2\pi}{N'}\right) \right]$$

$$A'B' = \sqrt{((xb' - xa')^2 + (yb' - ya')^2)}$$

On trouve ainsi $\mathrm{I}3' = A'B' - \frac{d3'}{\cos(\alpha_{C3'})} * 1000$ avec $\alpha_{C3'} = atan(\frac{2\pi * Re3'}{p3'})$ est l'angle d'hélice de la couche externe du toron externe.

La somme SI3' est la somme des distances interfils séparant chaque couple de fils externes adjacents de la couche externe.

La distance interfils I2' est la distance entre 2 centres de fils métalliques intermédiaire moins le diamètre fil. Le calcul est le même que celui précédemment décrit.

La somme SI2' est la somme des distances interfils séparant chaque couple de fils intermédiaires adjacents de la couche externe.

De préférence, les torons ne subissent pas de préformation.

Selon l'invention, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel matériau métallique est préférentiellement mis en oeuvre avec un matériau en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,4% et 1,2%, notamment entre 0,5% et 1, 1% ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

Avantageusement, les torons externes sont enroulés en hélice autour du toron interne selon un pas pe allant de 30 mm à 100 mm et de préférence allant de 50 mm à 90 mm. L'invention a également pour objet un câble tel que décrit précédemment extrait d'une matrice polymérique.

De préférence, la matrice polymérique est une matrice élastomérique.

La matrice polymérique, de préférence élastomérique, est à base d'une composition polymérique, de préférence élastomérique.

Par matrice polymérique, on entend une matrice comprenant au moins un polymère. La matrice polymérique est ainsi à base d'une composition polymérique.

Par matrice élastomérique, on entend une matrice comprenant au moins un élastomère. La matrice élastomérique préférentielle est ainsi à base d'une composition élastomérique.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Pour rappel, une nappe dans un pneumatique est formée du câble précédemment décrit noyé dans la composition élastomérique. Les compositions utilisables pour ces nappes sont des compositions conventionnelles pour calandrage d'éléments filaires de renfort et comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les fils métalliques et la matrice dans laquelle ils sont noyés est assurée par exemple par un revêtement métallique, par exemple une couche de laiton.

Les valeurs des caractéristiques décrites dans la présente demande pour le câble extrait sont mesurées sur ou déterminées à partir de câbles extrait d'une matrice polymérique, notamment élastomérique, par exemple d'un pneumatique. Ainsi, par exemple sur un pneumatique, on retire la bande de matière radialement à l'extérieur du câble à extraire de façon à apercevoir le câble à extraire affleurer radialement de la matrice polymérique. Ce retrait peu se faire par décorticage au moyen de pinces et de couteaux ou bien par rabotage. Puis, on dégage l'extrémité du câble à extraire au moyen d'un couteau. Puis, on tire sur le câble de façon à l'extraire de la matrice en appliquant un angle relativement faible de façon à ne pas plastifier le câble à extraire. Les câbles extraits sont alors nettoyés soigneusement, par exemple au moyen d'un couteau, de façon à détacher les restes de matrice polymérique accrochés localement au câble et en prenant soin de ne pas dégrader la surface des fils métalliques.

Les caractéristiques avantageuses décrites ci-dessous s'appliquent indifféremment au câble tel que défini ci-dessus et au câble extrait.

Avantageusement, SL ≤ 37 500 MPa.mm et de préférence SL ≤ 35 000 MPa.mm. Plus ce critère SL est faible, meilleure est l'endurance sous flexion du câble.

Avantageusement, SL ≥ 25 000 MPa.mm et de préférence SL ≥ 27 500 MPa.mm.

De préférence SL est supérieur à 25 000 MPa.mm car on cherche un encombrement plutôt élevé en maximisant la masse métal.

Avantageusement, Ec ≥ 0,47 et de préférence Ec ≥ 0,48.

Avantageusement, Ec ≤ 0,65 et de préférence Ec ≤ 0,55.

En effet, dans ces plages de critère d'encombrement Ec, on peut obtenir le maximum de masse métal dans le moins de surface possible tout en gardant une bonne pénétration pour le critère endurance SL. En effet, plus la masse métal est importante, moins il va y avoir de contraintes de tension dans le câble à iso effort et à contrario, si l'encombrement est trop important pour avoir la même masse métal, le câble est plus gros et les composites d'élastomères comprenant le câble sont plus épais entraînant des risques d'échauffement plus importants et des problèmes de dimensionnement de l'objet final.

De préférence, αf est supérieur ou égal à 0° et de préférence supérieur ou égal à 3°.

De préférence, αf est inférieur ou égal à 25° et de préférence inférieur ou égal à 20°.

Sur cette plage d'angle de contact allant de 0° à 25°, la zone de contact est maximale et le câble est relativement bien pénétré par la composition polymérique.

De préférence, αt est supérieur ou égal à 0° et de préférence supérieur ou égal à 3°.

De préférence, αt est inférieur ou égal à 20°, de préférence inférieur ou égal à 15° et plus préférentiellement inférieur ou égal à 10°.

Sur cette plage d'angle d'hélice, on minimise les efforts de contacts entre torons externes et le toron interne lors de la mise en traction du câble.

Pour le calcul du critère endurance sous flexion, les angles αf et αt sont exprimés en radian, soit la valeur en degré multipliée par π et divisée par 180°.

Dans un mode de réalisation, au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C ≤ 0,80%.

Dans un autre mode de réalisation, au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C > 0,80%, de préférence C ≥ 0,82 %. De telles compositions d'aciers rassemblent les aciers non alliés (points 3.2.1 et 4.1 de la norme NF EN 10020 de septembre 2000), les aciers inoxydables (points 3.2.2 et 4.2 de la norme NF EN 10020 de septembre 2000) et d'autres aciers alliés (point 3.2.3 et 4.3 de la norme NF EN 10020 de septembre 2000). Un taux de carbone relativement élevé permet d'atteindre la résistance mécanique des fils métalliques des câbles selon l'invention. Avantageusement, au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C ≤ 1,20% et de préférence C ≤ 1,10%. L'utilisation d'un taux de carbone trop important est d'une part relativement coûteuse et d'autre part entraine une baisse de l'endurance en fatigue-corrosion des fils métalliques.

De préférence, d1, d1', d2', d3, d3' vont, indépendamment les uns des autres, de 0,12 mm à 0, 38 mm et de préférence de 0,15 mm à 0,35 mm.

Dans un mode de réalisation, le câble est tel que chaque couche externe de chaque toron externe est enroulée selon un sens d'enroulement opposé au sens d'enroulement du câble et la couche externe du toron interne est enroulée selon le même sens d'enroulement que le sens d'enroulement du câble. Dans ce mode de réalisation, le sens d'enroulement de chaque fil externe du toron externe selon un sens d'enroulement opposé au sens d'enroulement de chaque fil externe du toron interne permet de former des zones de contact moins ponctuelles et relativement plus étendues favorisant le coefficient de rendement.

Dans un autre mode de réalisation, le câble est tel que chaque couche externe de chaque toron externe et la couche externe du toron interne sont enroulées selon le même sens d'enroulement que le sens d'enroulement du câble. Dans cet autre mode de réalisation, une zone de contact plus ponctuelle et moins linéique est formée favorisant moins le coefficient de rendement mais permettant une mise en oeuvre industrielle plus aisée du fait que toutes les couches sont enroulées dans le même sens et on assemble le câble dans le même sens.

Dans une alternative, quand Q>1, chaque couche interne et intermédiaire de chaque toron externe est enroulée selon le sens d'enroulement opposé au sens d'enroulement du câble, et la couche interne du toron interne est enroulée selon le sens d'enroulement du câble.

Dans une autre alternative, quand Q>1, chaque couche interne et intermédiaire de chaque toron externe et la couche interne du toron interne sont enroulées selon le sens d'enroulement du câble.

Avantageusement, on peut envisager, quand Q>1 notamment, les différentes combinaisons de sens d'enroulement rassemblées dans le tableau 1 ci-dessous.

[Tableau 1]

| Câble | | | | | | | | | | | | | |
|---|---|---|---|---|---|---|---|---|---|---|---|---|---|
| Toron interne | sens C1 | S | Z | S | Z | Z | S | Z | S | S | Z | S | S |
| | sens C3 | S | Z | S | Z | S | Z | S | Z | S | Z | Z | Z |
| Toron externe | sens C1' | S | Z | Z | S | Z | S | S | Z | Z | S | Z | Z |
| | sens C2' | S | Z | Z | S | Z | Z | S | Z | Z | S | S | Z |
| | sens C3' | S | Z | Z | S | S | Z | S | Z | S | Z | S | S |
| Sens d'enroulement du câble | | S | Z | S | Z | S | Z | S | Z | S | Z | Z | Z |

Avantageusement, le coefficient de pénétrabilité du câble Cp est supérieur ou égal à 0,60 et de préférence supérieur ou égal à 0,70. En effet, il existe suffisamment d'espace entre les fils ou les torons pour permettre le passage d'une composition polymérique, de préférence élastomérique.

La couche externe du câble est désaturée.

Par définition, une couche désaturée est telle qu'il existe suffisamment d'espace entre les fils de façon à permettre le passage d'une composition polymérique, de préférence élastomérique. Une couche désaturée signifie que les fils ne se touchent pas et qu'il y a suffisamment d'espace entre deux fils adjacents permettant le passage d'une composition polymérique, de préférence élastomérique. Par opposition, une couche saturée est telle qu'il n'existe pas suffisamment d'espace entre les fils de la couche pour permettre le passage d'une composition polymérique, de préférence élastomérique, par exemple car les fils de la couche se touchent deux à deux.

Par définition, une couche de câble désaturée est telle que la distance inter-torons des torons externes est supérieure ou égale à 30 $\mu$m. La distance inter-torons de la couche externe de torons externes est définie, sur une section du câble perpendiculaire à l'axe principal du câble, comme la distance la plus courte qui sépare, en moyenne, les enveloppes circulaires dans lesquelles sont inscrits deux torons externes adjacents. Ainsi, cette construction du câble permet d'assurer une bonne pénétrabilité par la composition élastomérique de la couche externe.

Avantageusement, la couche externe du toron interne est désaturée.

Avantageusement, la distance interfils de la couche externe du toron interne est supérieure ou égale à 10 $\mu$m. De préférence, la distance interfils de la couche externe du toron interne est supérieure ou égale à 15 $\mu$m.

De préférence, la distance interfils de la couche externe du toron interne est inférieure ou égale à 100$\mu$m.

Avantageusement, la somme SI3 des distances interfils I3 de la couche externe du toron interne est supérieure au diamètre d3 des fils externes de la couche externe.

Avantageusement, chaque toron est du type non gommé in situ. Par non gommé in situ, on entend qu'avant assemblage des torons entre eux, chaque toron est constitué des fils des différentes couches et dépourvu de composition polymérique, notamment de composition élastomérique.

La couche externe de chaque toron externe est désaturée. Avantageusement, la distance interfils de la couche externe de chaque toron externe est supérieure ou égale à 10 $\mu$m. De préférence, la distance interfils de la couche externe de chaque toron externe est supérieure ou égale à 15 $\mu$m.

De préférence, la distance interfils de la couche externe de chaque toron externe est inférieure ou égale à 100 $\mu$m.

Avantageusement, la somme SI2' des distances interfils I2' de la couche intermédiaire de chaque toron externe est supérieure au diamètre d2' des fils intermédiaire de la couche intermédiaire.

Avantageusement, la somme SI3' des distances interfils I3' de la couche externe de chaque toron externe est supérieure ou égale au diamètre d3' des fils externes de la couche externe.

De préférence, la couche externe du toron interne est enroulée autour de la couche interne du toron interne au contact de la couche interne du toron interne.

De préférence, la couche externe du toron externe est enroulée autour de la couche intermédiaire du toron externe au contact de la couche intermédiaire du toron externe et la couche intermédiaire du toron externe est enroulée autour de la couche interne du toron externe au contact de la couche interne du toron externe.

Avantageusement, L=6, 7 ou 8 de préférence L=6 ou 7 et plus préférentiellement L=6. De préférence, K=1 et L=6. Dans le câble dans lequel K=1, les efforts transversaux les plus sévères sont les efforts transversaux exercés par les torons externes sur le toron interne.

## Toron interne du câble selon l'invention

Dans un mode de réalisation, Q=1.

Avantageusement, N=5, 6 ou 7 et de préférence N= 6.

Dans un autre mode de réalisation préféré, Q>1, de préférence Q=2, 3 ou 4.

Avantageusement, N=7, 8, 9 ou 10, de préférence N= 8 ou 9.

Dans une première variante, Q=2, N=7 ou 8, de préférence Q=2, N=7.

Dans une deuxième variante, Q=3, N=7, 8 ou 9, de préférence Q=3, N=8.

Dans une troisième variante, Q=4, N=7, 8, 9 ou 10, de préférence, Q=4, N=9.

Très avantageusement, chaque fil interne du toron interne présente un diamètre d1 égal au diamètre d3 de chaque fil externe du toron interne. Ainsi, on utilise préférentiellement le même diamètre de fil sur les couches interne et externe du toron interne ce qui limite le nombre de fils différents à gérer lors de la fabrication du câble.

## Torons externes du câble selon l'invention

Dans un mode de réalisation, Q'=1.

Avantageusement, M'=3, 4, 5 ou 6 et de préférence M'= 3 ou 4.

Avantageusement, N'=9, 10 ou 11 et de préférence N'= 9.

Dans un autre mode de réalisation préféré, Q'>1, de préférence Q'=2, 3 ou 4. Avantageusement, M'=7, 8, 9 ou 10 et de préférence M'=7, 8 ou 9.

Avantageusement, N'=12, 13, 14 ou 15 et de préférence N'= 12, 13 ou 14.

Dans une première variante, Q'=2, M'=7 ou 8 et N'=12 ou 13.

Dans une deuxième variante, Q'=3, M'=8 ou 9 et N'=13 ou 14, de préférence Q'=3, M'=9 et N'=14.

Dans une troisième variante, Q'=4, M'=9 ou 10 et N'= 12, 13 ou 14.

Très avantageusement, chaque fil intermédiaire du toron externe présente un diamètre d2' égal au diamètre d3' de chaque fil externe du toron externe. Ainsi, on utilise préférentiellement le même diamètre de fil sur les couches intermédiaire et externe du toron externe ce qui limite le nombre de fils différents à gérer lors de la fabrication du câble.

Dans un arrangement préféré, Q=4, N=9, Q'=3, M'=9 et N'=14, et d1=d3, d2'=d3' et $d3' \leq d1'$.

Dans un autre arrangement préféré, Q=4, N=9, Q'=1, M'=3 et N'=9, d1=d3 et d1'<d3'.

## PRODUIT RENFORCE SELON L'INVENTION

Un autre objet de l'invention est un produit renforcé comprenant une matrice polymérique et au moins un câble tel que défini précédemment.

Avantageusement, le produit renforcé comprend un ou plusieurs câbles selon l'invention noyés dans la matrice polymérique, et dans le cas de plusieurs câbles, les câbles sont agencés côte à côte selon une direction principale.

## PNEUMATIQUE SELON L'INVENTION

Un autre objet de l'invention est un pneumatique comprenant au moins un câble tel que défini ci-dessus.

Dans un mode de réalisation, le pneumatique comporte une armature de carcasse ancrée dans deux bourrelets et surmontée radialement par une armature de sommet elle-même surmontée d'une bande de roulement, l'armature de carcasse comportant au moins un câble tel que défini ci-dessus.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 25 pouces, de préférence du 25 au 57 pouces.

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique tel qu'un bandage non pneumatique, une bande transporteuse ou une chenille.

L'invention sera mieux comprise à la lecture des exemples qui vont suivre, donnés uniquement à titre d'exemples non limitatifs et en se référant aux dessins dans lesquels :

- la figure 1 est une vue en coupe perpendiculaire à la direction circonférentielle d'un pneumatique selon l'invention ;

- la figure 2 est une vue de détails de la zone II de la figure 1 ;
- la figure 3 est une vue en coupe d'un produit renforcé selon l'invention ;
- la figure 4 est une vue schématique en coupe perpendiculaire à l'axe du câble (supposé rectiligne et au repos) d'un câble (50) selon un premier mode de réalisation de l'invention ;
- la figure 5 une vue schématique en coupe perpendiculaire à l'axe du câble (supposé rectiligne et au repos) d'un câble extrait (50') selon un premier mode de réalisation de l'invention ;
- la figure 6 est une représentation schématique de l'angle αf du câble (50) de la figure 4 ; et
- la figure 7 est une vue schématique de différents paramètres géométriques du câble.

## EXEMPLE DE PNEUMATIQUE SELON L'INVENTION

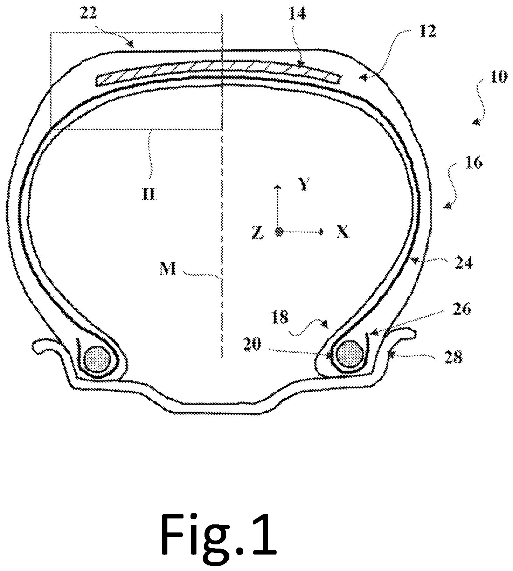

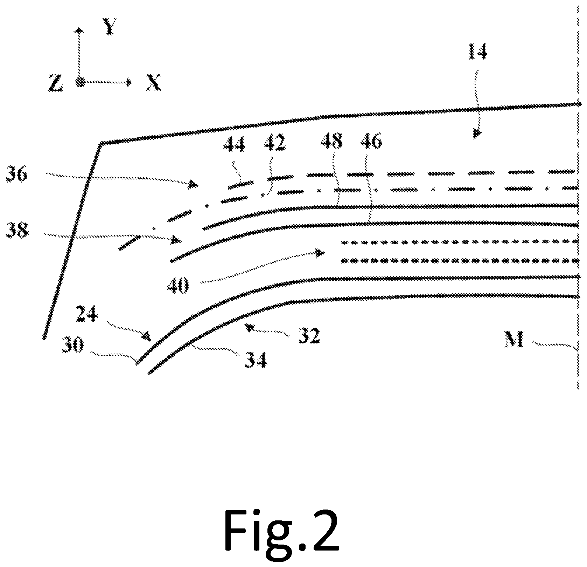

Dans les figures 1 et 2, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

On a représenté sur les figures 1 et 2 un pneumatique selon l'invention et désigné par la référence générale 10.

Le pneumatique 10 est pour véhicule lourd de type génie civil, par exemple de type « chargeuse ». Ainsi, le pneumatique 10 présente une dimension de type 35/65 R 33. Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux 50 selon l'invention (non représentés). Les câbles de carcasse 50 sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48.

L'armature additionnelle 40, également appelée bloc limiteur, dont la fonction est de reprendre en partie les sollicitations mécaniques de gonflage, comprend, par exemple et de façon connue en soi, des éléments de renfort métalliques additionnels, par exemple tels que décrits dans FR 2 419 181 ou FR 2 419 182 faisant un angle au plus égal à 10°, de préférence allant de 5° à 10° avec la direction circonférentielle Z du pneumatique 10.

## EXEMPLE DE PRODUIT RENFORCE SELON L'INVENTION

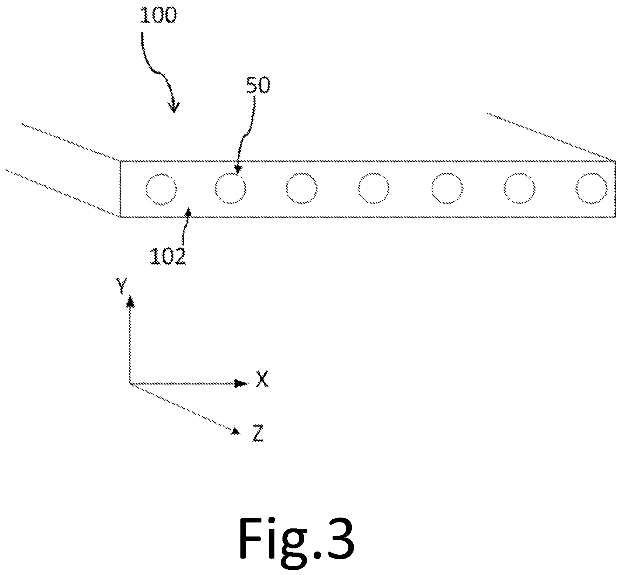

On a représenté sur la figure 3 un produit renforcé selon l'invention et désigné par la référence générale 100. Le produit renforcé 100 comprend au moins un câble 50, en l'espèce plusieurs câbles 50, noyés dans la matrice polymérique 102.

Sur la figure 3, on a représenté la matrice polymérique 102, les câbles 50 dans un repère X, Y, Z dans lequel la direction Y est la direction radiale et les directions X et Z sont les directions axiale et circonférentielle. Sur la figure 3, le produit renforcé 100 comprend plusieurs câbles 50 agencés côte à côte selon la direction principale X et s'étendant parallèlement les uns aux autres au sein du produit renforcé 100 et noyés collectivement dans la matrice polymérique 102. Ici, la matrice polymérique 102 est une matrice élastomérique à base d'une composition élastomérique.

CABLE SELON UN PREMIER MODE DE REALISATION DE L'INVENTION

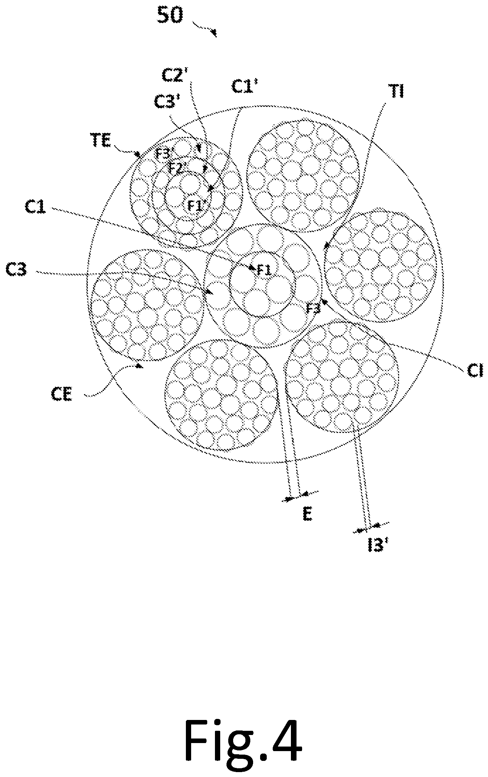

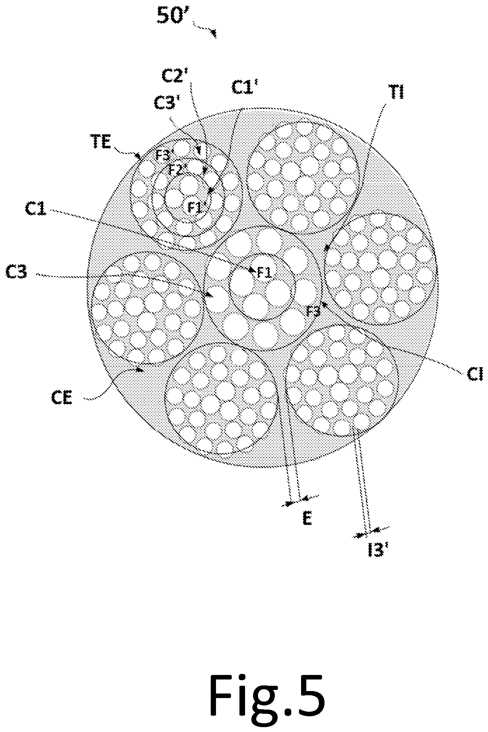

On a représenté sur les figures 4 et 5 respectivement le câble 50 et le câble 50' selon un premier mode de réalisation de l'invention.

Les câbles 50 et 50' ont la même structure géométrique. Le câble 50' est obtenu après extraction du pneumatique 10.

Le câble 50 et le câble extrait 50' sont métalliques et du type multi-torons à deux couches cylindriques. Ainsi, on comprend que les couches de torons constituant le câble 50 ou 50' sont au nombre de deux, ni plus, ni moins.

Le câble 50, comme le câble extrait 50', comprend une couche interne CI du câble constituée de K=1 toron interne TI. La couche externe CE est constituée de L>1 torons externes TE enroulés autour de la couche interne CI du câble. En l'espèce, L=6.

Le câble présente un critère endurance sous flexion $\mathrm{SL}= \max(\frac{\Delta \sigma_{flexion\_CI}}{Cp}; \frac{\Delta \sigma_{flexion\_CE}}{C_r \times Cp})$ calculé comme suit :

$\Delta \sigma_{flexion\_CI} = Macier \times Max(d1; d1'; d2')/2 = 210\,000 \times 0,26/2 = 27\,300$ MPa.mm et

$$\Delta \sigma_{flexion\_CE} = Macier \times Max(d3; d3')/2 = 210\,000 \text{ x } 0,26/2 = 27\,300 \text{ MPa.mm.}$$

La distance inter-torons E=80 $\mu$m> 70 $\mu$m, ainsi $Cp_{IT}$ = 1,00
La distance inter fils I3'= 34 $\mu$m , ainsi $Cp\ C3'$ = 0,02x 34 + 0,2 = 0,88
La distance inter fils I2'= 32 $\mu$m , ainsi $Cp\ C2'$ = 0,02x 32 + 0,2 = 0,84
CpTe= (0,88 + 0,84)/2=0,86

Par conséquent, le coefficient de pénétrabilité du câble est Cp = (1,00+0,86)/2= 0,93, supérieur à 0,60.

$$C_r = 1 - \left(\frac{\sin(\alpha_f)}{d3 \times d3'} \times \frac{\left(\sum_{i=1}^{Q'+M'+N'} F_{mi}\right) \times \sin(\alpha t)}{N \times Cste}\right) = 1 - \left(\frac{\sin\left(3,1 \text{ x } \frac{\pi}{180}\right)}{0,26 \text{ x } 0,15} \times \frac{1528 \times \sin\left(5,5 \text{ x } \frac{\pi}{180}\right)}{14 \times 1500}\right) = 0,99.$$

$$\mathrm{SL}= \max(\frac{27300}{0,93}; \frac{27300}{0,99 \times 0,93}) = \max (29355 ; 29651) = 29651$$ MPa.mm qui est bien inférieur à 40000 MPa.mm.

La surface compactée Sc = [4 $\times$(0,26/2)$^2$+9 $\times$ (0,26/2)$^2$ + 6x (3 $\times$(0,18/2)$^2$+ 9 $\times$ (0,15/2)$^2$ + 14 $\times$ (0,15/2)$^2$)] $\times$ $\pi$ =3,59 mm$^2$ et la surface d'encombrement Se = $\pi$ $\times$ (3,13/2)$^2$ = 7,68.

Le critère d'encombrement est donc Ec= Sc/Se = 3,59/7,68= 0,47. Ec est bien supérieur ou égal à 0,46.

La couche externe des câbles 50 et 50' est désaturée. Ainsi, la distance inter-torons E des torons externes est supérieure strictement à 30 $\mu$m. Ici E=77 $\mu$m.

$\alpha$f est supérieur ou égal à 0° et de préférence supérieur ou égal à 3° et inférieur ou égal à 25° et de préférence supérieur ou égal à 20°. Ici $\alpha$f = 3,1°.

$\alpha$t est supérieur ou égal à 0° et de préférence supérieur ou égal à 3° et inférieur ou égal à 20°, de préférence inférieur ou égal à 15° et plus préférentiellement inférieur ou égal à 10°. Ici $\alpha$t = 5,5°.

Torons internes TI des câbles 50 et 50'

Chaque toron interne TI est à deux couches et comprend une couche interne C1 constituée de Q=4 fils métalliques internes F1 et une couche externe C3 constituée de N=9 fils métalliques externes F3 enroulés autour de la couche interne C1.

La couche externe C3 de chaque toron interne TI est désaturée. La distance interfils de la couche externe du toron interne est supérieure ou égale à 30 $\mu$m, et ici égale à 38 $\mu$m. La somme SI3 des distances interfils I3 de la couche externe C3 est supérieure au diamètre d3 des fils externe F3 de la couche externe C3. Ici, la somme SI3= 0,038x 9= 0,34 mm, valeur supérieure à d3=0,26 mm.

d1 et d3 vont, indépendamment l'un de l'autre, de 0,12 à 0,38 mm et de préférence de 0,15 à 0,35 mm Ici d1=d3=0,26 mm.

<u>Torons externes TE des câbles 50 et 50'</u>

Chaque toron externe TE est à trois couches et comprend une couche interne C1' constituée de Q'=3 fils métalliques internes F1', une couche intermédiaire C2' constituée de M'=9 fils métalliques intermédiaires F2' enroulés autour de la couche interne C1' et une couche externe C3' constituée de N'=14 fils métalliques externes F3' enroulés autour de la couche intermédiaire C2'.

La couche externe C3' de chaque toron externe TE est désaturée. Etant désaturée, la distance interfils I3' de la couche externe C3' séparant en moyenne les N' fils externes est supérieure ou égale à 10 $\mu$m. La distance interfils I3' de la couche externe de chaque toron externe est supérieure ou égale à 30 $\mu$m, et ici égale à 34 $\mu$m. La somme SI3' des distances interfils I3' de la couche externe C3' est supérieure au diamètre d3' des fils externes F3' de la couche externe C3'. Ici, la somme SI3'= 0,034 $\times$ 14= 0,48 mm, valeur supérieure à d3'=0,15 mm.

Chaque couche externe C3' du toron externe TE est enroulée selon un sens d'enroulement opposé au sens d'enroulement du câble et la couche externe C3 du toron interne TI est enroulée selon le même sens d'enroulement que le sens d'enroulement du câble. Chaque couche interne C1' et intermédiaire C2' de chaque toron externe TE est enroulée selon le sens d'enroulement opposé au sens d'enroulement du câble, et la couche interne C1 du toron interne TI est enroulée selon le sens d'enroulement du câble. Ici, le sens d'enroulement des couches C1, C3 et du câble est Z et celui des couches C1', C2' et C3' est S.

## PROCEDE DE FABRICATION DU CABLE SELON L'INVENTION

Nous allons maintenant décrire un exemple de procédé de fabrication du câble mutitorons 50.

Chaque toron interne précédemment décrit est fabriqué selon des procédés connus comportant les étapes suivantes, opérées préférentiellement en ligne et en continu :

- tout d'abord, une première étape d'assemblage par câblage ou retordage des Q= 4 fils internes F1 de la couche interne C1 au pas p1 et dans le sens Z pour former la couche interne C1 en un premier point d'assemblage ;
- suivie d'une deuxième étape d'assemblage par câblage ou retordage des M=9 fils externes F3 autour des Q fils internes F1 de la couche interne C1 au pas p3 et dans le sens Z pour former la couche externe C3 en un deuxième point d'assemblage ;
- préférentiellement une étape d'équilibrage final des torsions.

Chaque toron externe précédemment décrit est fabriqué selon des procédés connus comportant les étapes suivantes, opérées préférentiellement en ligne et en continu:

- tout d'abord, une première étape d'assemblage par câblage ou retordage des Q'= 3 fils internes F1' de la couche interne C1' au pas p1' et dans le sens S pour former la couche interne C1' en un premier point d'assemblage ;
- suivie d'une deuxième étape d'assemblage par câblage ou retordage des M'=9 fils intermédiaires F2' autour des Q' fils internes F1' de la couche interne C1' au pas p2' et dans le sens S pour former la couche intermédiaire C2' en un deuxième point d'assemblage;
- suivie d'une troisième étape d'assemblage par câblage ou retordage des N'=14 fils externes F3' autour des M' fils intermédiaires F2' de la couche intermédiaire C2' au pas p3' et dans le sens S pour former la couche externe C3' en un troisième point d'assemblage;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Après cette étape ultime d'équilibrage de la torsion, la fabrication du toron est terminée. Chaque toron est enroulé sur une ou plusieurs bobines de réception, pour stockage, avant l'opération ultérieure d'assemblage par câblage des torons élémentaires pour l'obtention du câble multi-torons.

Pour la fabrication du câble multi-torons de l'invention, on procède de manière bien connue de l'homme du métier, par câblage ou retordage des torons précédemment obtenus, à l'aide de machines de câblage ou retordage dimensionnées pour assembler des torons.

Ainsi, on assemble les L=6 torons externes TE autour du toron interne TI au pas pe et dans le sens Z pour former le câble 50. Eventuellement, dans une dernière étape d'assemblage, on enroule la frette F au pas pf dans le sens S autour de l'assemblage précédemment obtenu.

Le câble 50 est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur allant de 1 et 4 mm. Le pas de calandrage (pas de pose des câbles dans le tissu de composition élastomérique) va de 4 mm à 8 mm.

Ces tissus composites sont ensuite utilisés en tant que nappe de carcasse dans l'armature de carcasse lors du procédé de fabrication du pneumatique, dont les étapes sont par ailleurs connues de l'homme du métier.

CABLE SELON UN DEUXIEME MODE DE REALISATION DE L'INVENTION

A la différence du premier mode de réalisation décrit précédemment, le câble 60 selon le deuxième mode de réalisation est tel que Q=4 et N =9 et Q'=1, M'=3 et N'=9.

On a résumé dans le tableau 2 ci-dessous les caractéristiques pour les différents câbles 50, 50' et 60 selon l'invention.

[Tableau 2]

| Câbles | | | 50 | 50' | 60 |
|---|---|---|---|---|---|
| TI | | Q/N | 4/9 | 4/9 | 4/9 |
| | | d1/d3 (mm) | 0,26/0,26 | 0,26/0,26 | 0,26/0,26 |
| | | sens C1/pas p1 (mm) | Z/6 | Z/6 | Z/6 |
| | | sens C3/pas p3 (mm) | Z/12 | Z/12 | Z/12 |
| | | I3($\mu$m)/SI3(mm) | 38/0,34 | 38/0,34 | 38/0,34 |
| TE | | Q'/M'/N' | 3/9/14 | 3/9/14 | 1/3/9 |
| | | d1'/d2'/d3' (mm) | 0,18/0,15/0,15 | 0,18/0,15/0,15 | 0,12/0,20/0,23 |
| | | sens C1'/pas p1' (mm) | S/5 | S/5 | S/inf |
| | | sens C2'/pas p2' (mm) | S/10 | S/10 | S/6 |
| | | sens G3'/pas p3' (mm) | S/14 | S/14 | S/12 |
| | | I2'($\mu$m)/SI2'(mm) | 32/0,29 | 32/0,29 | 74/0,22 |
| | | 13'(pm)/SIS'(mm) | 34/0,48 | 34/0,48 | 22/0,20 |
| Sens câble/pilpe | | | Z/inf/70 | Z/inf/70 | Z/inf/60 |
| K | | | 1 | 1 | 1 |
| L | | | 6 | 6 | 6 |
| E ($\mu$m) | | | 77 | 77 | 79 |
| D (mm) | | | 3,13 | 3,13 | 3,11 |
| $\Delta \sigma_{flexion\_CI}$ | | | 27300 | 27300 | 27300 |
| $\Delta \sigma_{flexion\_CE}$ | | | 27300 | 27300 | 2 7300 |
| $Cp_{IT}$ | | | 1,00 | 1,00 | 1,00 |
| Cp C2' | | | 0,84 | 0,84 | 1,00 |
| Cp C3' | | | 0,88 | 0,88 | 0,64 |
| CpTE | | | 0,86 | 0,86 | 0,69 |
| Cp | | | 0,93 | 0,93 | 0,82 |
| $\alpha$f (°) | | | 3,1 | 3,1 | 4,4 |

(suite)

| Câbles | 50 | 50' | 60 |
|---|---|---|---|
| $\alpha t$ (°) | 5,5 | 5,5 | 6,4 |
| $\sum_{i=1}^{Q'+M'+N'} F_{mi}$ (N) | 1528 | 1528 | 1480 |
| Cr | 0,99 | 0,99 | 0,98 |
| SL (MPa.mm) | 29651 | 29651 | 33972 |
| Sc (mm²) | 3,59 | 3,59 | 3..53 |
| Se (mm²) | 7.68 | 7,68 | 7,59 |
| Ec | 0,47 | 0,47 | 0,47 |

TESTS COMPARATIFS

On a simulé différents câbles témoin et de l'état de la technique. On a résumé dans le tableau 3, les caractéristiques du câble de l'état de la technique EDT1 (câble dit « 189.23 ») et du câble de l'état de la technique EDT2 (câble dit « 68.23 »).

Le câble 189.23 comprend une couche interne du câble constituée d'un toron interne et une couche externe du câble constituée de six torons externes enroulés en hélice autour de la couche interne du câble. Chaque toron interne comprend une couche interne du toron constituée de trois fils internes, une couche intermédiaire du toron constituée de neuf fils intermédiaires et une couche externe du toron constituée de quinze fils externes. Chaque fil présente un diamètre égal à 0,23 mm. Chaque toron externe comprend une couche interne du toron constituée de trois fils internes, une couche intermédiaire du toron constituée de neuf fils intermédiaires et une couche externe du toron constituée de quinze fils externes. Chaque fil présente un diamètre égal à 0,23 mm.

Le câble 68.23 comprend une couche interne du câble constituée d'un toron interne et une couche externe du câble constituée de huit torons externes enroulés en hélice autour de la couche interne du câble. Chaque toron interne comprend une couche interne du toron constituée de trois fils internes et une couche externe du toron constituée de neuf fils externes. Chaque fil présente un diamètre égal à 0,26 mm. Chaque toron externe comprend une couche interne du toron constituée d'un fil interne et une couche externe du toron constituée de six fils externes. Chaque fil présente un diamètre égal à 0,23 mm.

[Tableau 3]

| Câbles | | EDT1 | EDT2 |
|---|---|---|---|
| TI | Q/M/N | 3/9/15 | 3/-/9 |
| | d1/d2/d3 (mm) | 0,23/0,23/0,23 | 0,26/70,26 |
| | sens C1/pas p1 (mm) | Z/6,5 | S/7 |
| | sens C2/pas p2 (mm) | Z/12 | - |
| | sens C3/pas p3 (mm) | Z/16 | S/14 |
| | I2($\mu$m)/SI2(mm) | 14/0,13 | - |
| | I3($\mu$m)/SI3(mm) | 10/0,15 | 16/0,14 |
| TE | Q'/M'/N' | 3/9/15 | 1/-/6 |
| | d1'/d2'/d3' (mm) | 0,23/0,23/0,23 | 0,23/-/0,23 |
| | sens C1'/pas p1' (mm) | Z/6,5 | Z/INF |
| | sens C2'/pas p2' (mm) | Z/12 | - |
| | sens C3'/pas p3' (mm) | Z/16 | Z/12 |
| | I2'($\mu$m)/SI2'(mm) | 14/0,13 | - |
| | I3'($\mu$m)/SI3'(mm) | 10/0.15 | - |

(suite)

| Câbles | EDT1 | EDT2 |
|---|---|---|
| Sens câble/pi/pe | S/ini/60 | S/inf/30 |
| K | 1 | 1 |
| L | 6 | 8 |
| E ($\mu$m) | 0 | - |
| D (mm) | 4,2 | 2,5 |
| $\Delta\sigma_{flexion\_CI}$ | 23730 | 27300 |
| $\Delta\sigma_{flexion\_CE}$ | 23730 | 27300 |
| $cp_{IT}$ | 0,40 | 0,40 |
| Cp C2' | 0,48 | |
| Cp C3' | 0,41 | |
| $CpTE$ | 0,41 | 0,40 |
| Cp | 0,41 | 0,40 |
| $\alpha f$ (°) | 34,2 | 14,4 |
| $\alpha t$ (°) | 8,4 | 10,9 |
| $\sum_{i=1}^{Q'+M'+N'} F_{mi}$ (N) | 3110 | 805 |
| Cr | 0,78 | 0,95 |
| SL (MPa.mm) | 74202 | 71842 |
| Sc (mm$^2$) | 7,58 | 2,96 |
| Se (mm$^2$) | 13,78 | 4,90 |
| Ec | 0,55 | 0,60 |

Les tableaux 2 et 3 montrent que, les câbles 50, 50' et 60 présentent un critère endurance sous flexion relativement bas par rapport aux câbles de l'état de la technique EDT1 et EDT2 tout en ayant un critère d'encombrement suffisant. En effet, les câbles EDT1 et EDT2 présentent un critère d'endurance sous flexion relativement élevé qui ne permet pas de réduire efficacement les contraintes dans le câble lors d'une sollicitation de flexion. Ainsi les câbles selon l'invention présentent un critère endurance sous flexion SL$\leq$ 40 000 MPa.mm suffisamment bas pour remédier à ces inconvénients tout en maintenant un encombrement satisfaisant.

L'invention ne se limite pas aux modes de réalisation précédemment décrits.

**Revendications**

1. Câble (50) multi-torons à deux couches, comprenant :

    - une couche interne (CI) du câble constituée de K=1 toron interne (TI) à deux couches (C1, C3) comprenant :

        - une couche interne (C1) constituée de Q=1,2,3 ou 4 fils métalliques internes (F1) de diamètre d1,
        - une couche externe (C3) constituée de N fils métalliques externes (F3) de diamètre d3 enroulés autour de la couche interne (C1),

    - une couche externe (CE) du câble constituée de L>1 torons externes (TE) à trois couches (C1', C2', C3') enroulés autour de la couche interne (CI) du câble comprenant :

        - une couche interne (C1') constituée de Q'=1, 2, 3 ou 4 fils métalliques internes (F1') de diamètre d1',

- une couche intermédiaire ( C2') constituée de M' fils métalliques intermédiaires (F2') de diamètre d2' enroulés autour de la couche interne (C1'), et
- une couche externe (C3') constituée de N' fils métalliques externes (F3') de diamètre d3' enroulés autour de la couche intermédiaire (C2'),

**caractérisé en ce que** le câble (50) présente :

- un critère endurance sous flexion SL ≤ 40000 MPa.mm avec $SL = \max(\frac{\Delta\sigma_{flexion\_CI}}{Cp}; \frac{\Delta\sigma_{flexion\_CE}}{C_r \times Cp})$ ; et
- un critère d'encombrement Ec ≥ 0,46 avec Ec= Sc/Se

où :

- $\Delta\sigma_{flexion\_CI}$ = $M_{acier} \times Max(d1; d1'; d2')/2$ en MPa.mm est le maximum de contrainte de flexion par unité de courbure vue par les fils internes ( F1 ; F1') des torons internes et externes ou des fils intermédiaires (F2') des torons externes ;
- $\Delta\sigma_{flexion\_CE}$ = $M_{acier} \times Max(d3; d3')/2$ en MPa.mm est le maximum de contrainte de flexion par unité de courbure vue par les fils métalliques externes (F3 ; F3') des torons internes et externes ;

- $M_{acier}$= 210 000 MPa est le module de l'acier ;
- d1, d1', d2, d3 et d3' sont exprimés en mm,
- $Cp = \frac{Cp\ IT + Cp\ TE}{2}$ est le coefficient de pénétrabilité du câble avec $Cp_{IT}$ est le coefficient de pénétration inter torons et $Cp\ TE$ est le coefficient de pénétrabilité des torons externes avec :
- une distance inter-torons E des torons externes (TE) de la couche externe (CE) du câble;
- $Cp_{IT}$= 1,0 lorsque E > 70µm ; et
- $Cp_{IT}$ = 0,015 × E - 0,05 lorsque 30µm ≤ E ≤70µm ; et
- $Cp\ TE = \frac{Cp\ C3' + \min(Cp\ C2'; Cp\ C3')}{2}$ avec CpC2' est le coefficient de pénétrabilité de la couche intermédiaire (C2') du toron externe (TE) et CpC3' est le coefficient de pénétrabilité de la couche externe (C3') du toron externe (TE) avec :
- $Cp\ C2'$= 0,4 lorsque la distance inter-fils I2' des fils métalliques intermédiaire (F2') de la couche intermédiaire (C2') I2'<10µm ;
- $Cp\ C2'$ = 1,0 lorsque 12' > 40µm ; et
- $Cp\ C2'$ = 0,02 × I2' + 0,2 lorsque 10µm ≤ 12' ≤40µm et
- $Cp\ C3'$= 0,4 lorsque la distance inter-fils I3'des fils métalliques externes (F3') de la couche externe (C3') 13'<10µm ;
- $Cp\ C3'$ = 1,0 lorsque 13' > 40µm ; et
- $Cp\ C3'$ = 0,02 × I3' + 0,2 lorsque 10µm ≤ 13' ≤40µm ;
- Cr est le coefficient de rendement du câble (50), sans unité, avec

$$C_r = 1 - \left(\frac{\sin(\alpha_f)}{d3 \times d3'} \times \frac{(\sum_{i=1}^{Q'+M'+N'} F_{mi}) \times \sin(\alpha t)}{N \times Cste}\right)$$

où
- d3 et d3' sont exprimés en mm,
- αf est l'angle de contact entre les fils métalliques externes (F3) du toron interne (TI) et les fils métalliques externes (F3') des torons externes (TE) exprimé en radian,
- αt est l'angle d'hélice de chaque toron externe (TE) exprimé en radian ; $\sum_{i=1}^{Q'+M'+N'} F_{mi}$ est la somme des forces à rupture pour les Q'+M'+N' fils d'un toron externe en Newton;
- Cste = 1500 N.mm$^{-2}$;

- Sc est la surface compactée en mm$^2$ avec Sc=$[Q \times (d1/2)^2 + N \times (d3/2)^2 + L \times (Q' \times (d1'/2)^2 + M' \times (d2'/2)^2 + N' \times (d3'/2)^2)] \times \pi$ et
- Se est la surface d'encombrement du câble (50) en mm$^2$ avec Se = $\pi \times (D/2)^2$, D étant le diamètre du câble en mm ;

dans lequel la couche externe (CE) du câble est désaturée de sorte que la distance inter-torons E des torons externes (TE) définie, sur une section du câble perpendiculaire à l'axe principal du câble (50), comme la distance la plus courte qui sépare, en moyenne, les enveloppes circulaires dans lesquelles sont inscrits deux torons externes (TE) adjacents soit supérieure ou égale à 30 $\mu$m ; et

dans lequel la couche externe (C3') de chaque toron externe (TE) est désaturée.

2. Câble (50) selon la revendication précédente, dans lequel SL $\leq$ 37 500 MPa.mm et de préférence SL $\leq$ 35 000 MPa.mm.

3. Câble (50) selon l'une quelconque des revendications précédentes, dans lequel SL $\geq$ 25 000 MPa.mm et de préférence SL $\geq$ 27 500 MPa.mm.

4. Câble (50) selon l'une quelconque des revendications précédentes, dans lequel Ec $\geq$ 0,47 et de préférence Ec $\geq$ 0,48.

5. Câble (5) selon l'une quelconque des revendications précédentes, dans lequel Ec $\leq$ 0, 65 et de préférence Ec $\leq$ 0, 55.

6. Câble (50) selon l'une quelconque des revendications précédentes, dans lequel $\alpha$f est supérieur ou égal à 0° et de préférence supérieur ou égal à 3°.

7. Câble (50) selon l'une quelconque des revendications précédentes, dans lequel $\alpha$f est inférieur ou égal à 25° et de préférence inférieur ou égal à 20°.

8. Câble (50) selon l'une quelconque des revendications précédentes, dans lequel $\alpha$t est supérieur ou égal à 0° et de préférence supérieur ou égal à 3°.

9. Câble (50) selon l'une quelconque des revendications précédentes,
dans lequel $\alpha$t est inférieur ou égal à 20°, de préférence inférieur ou égal à 15° et plus préférentiellement inférieur ou égal à 10°.

10. Câble (50) selon l'une quelconque des revendications précédentes, dans lequel le coefficient de pénétrabilité du câble Cp est supérieur ou égal à 0,60 et de préférence supérieur ou égal à 0,70.

11. Câble (50) selon l'une quelconque des revendications précédentes, extrait d'une matrice polymérique avec l'une des méthodes d'extraction décrites dans la description.

12. Produit renforcé (100), **caractérisé en ce qu'**il comprend une matrice polymérique (102) et au moins un câble (50) selon l'une quelconque des revendications 1 à 10.

13. Pneumatique (10), **caractérisé en ce qu'**il comprend au moins un câble (50) selon l'une quelconque des revendications 1 à 10 ou un produit renforcé selon la revendication 12.


**Patentansprüche**

1. Mehrlitziges Seil (50) mit zwei Lagen, umfassend:

- eine innere Seillage (CI), die aus K = 1 inneren Litze (TI) mit zwei Lagen (C1, C3) gebildet ist, umfassend:

- eine innere Lage (C1), die aus Q = 1, 2, 3 oder 4 inneren Metalldrähten (F1) mit einem Durchmesser d1 gebildet ist,
- eine äußere Lage (C3), die aus N äußeren Metalldrähten (F3) mit einem Durchmesser d3, die um die innere Lage (C1) gewickelt sind, gebildet ist,
- eine äußere Seillage (CE), die aus L > 1 äußeren Litzen (TE) mit drei Lagen (C1', C2', C3'), die um die innere Seillage (CI) gewickelt sind, gebildet ist, umfassend:

- eine innere Lage (C1'), die aus Q' = 1, 2, 3 oder 4 inneren Metalldrähten (F1') mit einem Durchmesser d1' gebildet ist,

• eine mittlere Lage (C2'), die aus M' mittleren Metalldrähten (F2') mit einem Durchmesser d2', die um die innere Lage (C1') gewickelt sind, gebildet ist, und

- eine äußere Lage (C3'), die aus N' äußeren Metalldrähten (F3') mit einem Durchmesser d3', die um die mittlere Lage (C2') gewickelt sind, gebildet ist, **dadurch gekennzeichnet, dass** das Seil (50) Folgendes aufweist:

- ein Biegefestigkeitskriterium SL ≤ 40.000 MPa.mm mit

$$SL = \max\left(\frac{\Delta\sigma_{flexion\_CI}}{Cp} ; \frac{\Delta\sigma_{flexion\_CE}}{C_r \times Cp}\right)$$ ; und

- ein Abmessungskriterium Ec ≥ 0,46 mit Ec = Sc/Se, wobei:

- $\Delta\sigma_{flexion\_CI}$ = $M_{acier} \times Max(d1; d1'; d2')/2$ in MPa.mm die maximale Biegebeanspruchung pro Krümmungseinheit der inneren Drähte (F1; F1') der inneren und äußeren Litzen oder der mittleren Drähte (F2') der äußeren Litzen ist;
- $\Delta\sigma_{flexion\_CE}$ = $M_{acier} \times Max(d3; d3')/2$ in MPa.mm die maximale Biegebeanspruchung pro Krümmungseinheit der äußeren Metalldrähte (F3; F3') der inneren und äußeren Litzen ist;
- $M_{acier}$ = 210.000 MPa das Modul des Stahls ist;
- d1, d1', d2', d3 und d3' in mm ausgedrückt sind,

- $$CP = \frac{Cp\ IT + Cp\ TE}{2}$$ der Penetrativitätskoeffizient des Seils ist, wobei $Cp_{IT}$ der Penetrationskoeffizient zwischen den Litzen und $Cp\ TE$ der Penetrativitätskoeffizient der äußeren Litzen ist, mit:
- einem Litzen-Zwischenabstand E der äußeren Litzen (TE) der äußeren Lage (CE) des Seils;
- $Cp_{IT}$= 1,0, wenn E > 70 um, und
- $Cp_{IT}$ = 0,015 $\times E$ - 0,05, wenn 30 um ≤ E ≤ 70 $\mu$m, und

- $$Cp\ TE = \frac{Cp\ C3' + \min(Cp\ C2'; Cp\ C3')}{2}$$ , wobei CpC2' der Penetrativitätskoeffizient der mittleren Lage (C2') der äußeren Litze (TE) ist und Cp C3' der Penetrativitätskoeffizient der äußeren Lage (C3') der äußeren Litze (TE) ist, wobei:

- Cp C2' = 0,4, wenn der Litzen-Zwischenabstand 12' der mittleren Metalldrähte (F2') der mittleren Lage (C2') 12' < 10 um;
- $Cp\ C2'$ = 1,0, wenn I2' > 40 um und
- $Cp\ C2'$ = 0,02 $\times I2'$ + 0, 2, wenn 10 um ≤ I2' ≤ 40 um, und
- Cp C3' = 0,4, wenn der Litzen-Zwischenabstand 13' der äußeren Metalldrähte (F3') der äußeren Lage (C3') 13' < 10 um;
- $Cp\ C3'$ = 1,0, wenn 13' > 40 um, und
- $Cp\ C3'$ = 0,02 $\times I3'$ + 0, 2, wenn 10 um ≤ 13' ≤ 40 um;

- Cr der Wirkungsgrad des Seils (50) ist, ohne Einheit, wobei

$$C_r = 1 - \left(\frac{sin(\alpha_f)}{d3 x d3} \times \frac{\left(\sum_{i=1}^{Q'+M'+N'} F_{mi}\right) \times \sin(\alpha t)}{N\ x\ Cste}\right)$$ , wobei

- d3 und d3' in mm ausgedrückt sind,
- $\alpha$f der Kontaktwinkel zwischen den äußeren Metalldrähten (F3) der mittleren Litze (TI) und den äußeren Metalldrähten (F3') der äußeren Litzen (TE) ist, ausgedrückt in Radiant,
- $\alpha$t der Steigungswinkel jeder äußeren Litze (TE) ist, ausgedrückt in Radiant;

$\sum_{i=1}^{Q'+M'+N'} F_{mi}$ die Summe der Bruchkräfte für die Q'+M'+N' Drähte einer äußeren Litze in Newton ist;
- Cste = 1.500 N.mm$^{-2}$;
- Sc die verdichtete Oberfläche in mm$^2$ ist, wobei Sc = [Q$\times$(d1/2)$^2$ + N$\times$d3/2)$^2$ +

EP 4 172 407 B1

$L\times(Q'\times(d1'/2)^2 + M'\times(d2/2)^2 + N'\times(d3/2)^2)] \times \pi$, und

- Se die Abmessungsfläche des Seils (50) in $mm^2$ ist, wobei Se = $\pi \times (D/2)^2$, wobei D der Durchmesser des Seils in mm ist;

wobei die äußere Lage (CE) des Seils so entsättigt ist, dass der Litzen-Zwischenabstand E der äußeren Litzen (TE), der über einen zur Hauptachse des Seils (50) senkrechten Abschnitt des Seils als kürzester Abstand definiert ist, der im Durchschnitt die kreisförmigen Hüllen trennt, in denen zwei benachbarte äußere Litzen (TE) aufgenommen sind, größer als oder gleich 30 um ist; und

- wobei die äußere Lage (C3') jeder äußeren Litze (TE) entsättigt ist.

2.  Seil (50) nach dem vorangehenden Anspruch, wobei SL $\leq$ 37.500 MPa.mm und vorzugsweise SL $\leq$ 35.000 MPa.mm.

3.  Seil (50) nach einem der vorangehenden Ansprüche, wobei SL $\geq$ 25.000 MPa.mm und vorzugsweise SL $\geq$ 27.500 MPa.mm.

4.  Seil (50) nach einem der vorangehenden Ansprüche, wobei Ec $\geq$ 0,47 und vorzugsweise Ec $\geq$ 0,48.

5.  Seil (5) nach einem der vorangehenden Ansprüche, wobei Ec $\leq$ 0,65 und vorzugsweise Ec $\leq$ 0,55.

6.  Seil (50) nach einem der vorangehenden Ansprüche, wobei $\alpha$f größer als oder gleich 0° und vorzugsweise größer als oder gleich 3° ist.

7.  Seil (50) nach einem der vorangehenden Ansprüche, wobei $\alpha$f kleiner als oder gleich 25° und vorzugsweise kleiner als oder gleich 20° ist.

8.  Seil (50) nach einem der vorangehenden Ansprüche, wobei $\alpha$t größer als oder gleich 0° und vorzugsweise größer als oder gleich 3° ist.

9.  Seil (50) nach einem der vorangehenden Ansprüche, wobei $\alpha$t kleiner als oder gleich 20°, vorzugsweise kleiner als oder gleich 15° und besonders vorzugsweise kleiner als oder gleich 10° ist.

10. Seil (50) nach einem der vorangehenden Ansprüche, wobei der Penetrativitätskoeffizient Cp des Seils größer als oder gleich 0,60 und vorzugsweise größer als oder gleich 0,70 ist.

11. Seil (50) nach einem der vorangehenden Ansprüche, das aus einer mit einem der in der Beschreibung beschriebenen Verfahren extrahierten Polymermatrix extrahiert wurde.

12. Verstärktes Produkt (100), **dadurch gekennzeichnet, dass** es eine Polymermatrix (102) und mindestens ein Seil (50) nach einem der Ansprüche 1 bis 10 umfasst.

13. Reifen (10), **dadurch gekennzeichnet, dass** er mindestens ein Seil (50) nach einem der Ansprüche 1 bis 10 oder ein verstärktes Produkt nach Anspruch 12 umfasst.


**Claims**

1.  Two-layer multi-strand cord (50) comprising:

    - an internal layer (CI) of the cord made up of K=1 two-layer (C1, C3) internal strand (TI) comprising:

        - an internal layer (C1) made up of Q=1, 2, 3 or 4 internal metallic threads (F1) of diameter d1,
        - an external layer (C3) made up of N external metallic threads (F3) of diameter d3 wound around the internal layer (C1),
        - an external layer (CE) of the cord made up of L>1 three-layer (C1', C2', C3') external strands (TE) wound around the internal layer (CI) of the cord, comprising:

            - an internal layer (C1') made up of Q'=1, 2, 3 or 4 internal metallic threads (F1') of diameter d1',
            - an intermediate layer (C2') made up of M' intermediate metallic threads (F2') of diameter d2' wound around the internal layer (C1'), and
- an external layer (C3') made up of N' external metallic threads (F3') of diameter d3' wound around the intermediate layer (C2'),

**characterized in that** the cord (50) has:

- a bending endurance criterion SL ≤ 40 000 MPa.mm with $SL = max(\frac{\Delta\sigma_{bending\_CI}}{Cp}; \frac{\Delta\sigma_{bending\_CE}}{C_r \times Cp})$ ; and
- a size criterion Ec ≥ 0.46 with Ec= Sc/Se

where:

- $\Delta\sigma_{bending\_CI}$ = $M_{steel} \times Max(d1; d1'; d2')/2$ in MPa.mm is the maximum bending stress per unit curvature seen by the internal threads (F1; F1') of the internal and external strands or of the intermediate threads (F2') of the external strands;
- $\Delta\sigma_{bending\_CE}$ = $M_{steel} \times Max(d3; d3')/2$ in MPa.mm is the maximum bending stress per unit curvature seen by the external metallic threads (F3; F3') of the internal and external strands;
- $M_{steel}$= 210 000 MPa is the modulus of the steel;
- d1, d1', d2', d3 and d3' are expressed in mm,
- $Cp = \frac{Cp\ IT + Cp\ TE}{2}$ is the penetration coefficient for the cord with $Cp_{IT}$ the inter-strand penetration coefficient and $Cp\ TE$ the penetration coefficient for the external strands with an inter-strand distance E of the external strands (TE) of the external layer (CE) of the cord
- $Cp_{IT}$= 1.0 when E > 70μm; and
- $Cp_{IT}$ = 0.015 × E - 0.05 when 30μm ≤ E ≤70μm; and
- $Cp\ TE = \frac{Cp\ C3\prime + min\ (Cp\ C2\prime; Cp\ C3\prime)}{2}$ with CpC2' the penetration coefficient for the intermediate layer (C2') of the external strand (TE) and CpC3' the penetration coefficient for the external layer (C3') of the external strand (TE) with:
- $Cp\ C2'$= 0.4 when the inter-thread distance I2' of the intermediate metallic threads (F2') of the intermediate layer (C2') I2'<10 μm;
- $Cp\ C2'$ = 1.0 when I2' > 40μm; and
- $Cp\ C2'$ = 0.02 × I2' + 0.2 when 10μm ≤ I2' ≤40μm and
- $Cp\ C3'$= 0.4 when the inter-thread distance I3' of the external metallic threads (F3') of the external layer (C3') I3'<10 μm;
- $Cp\ C3'$ = 1.0 when I3' > 40μm; and
- $Cp\ C3'$ = 0.02 × I3' + 0.2 when 10μm ≤ I3' ≤40μm;
- Cr is the dimensionless performance coefficient of the cord (50) with

$$C_r = 1 - \left(\frac{\sin(\alpha_f)}{d3 \times d3\prime} \times \frac{(\sum_{i=1}^{Q\prime+M\prime+N\prime} F_{mi}) \times \sin(\alpha t)}{N \times Cste}\right)$$

where
- d3 and d3' are expressed in mm,
- of is the angle of contact between the external metallic threads (F3) of the internal strand (TI) and the external metallic threads (F3') of the external strands (TE) expressed in radians,
- αt is the helix angle of each external strand (TE) expressed in radians;

$\sum_{i=1}^{Q\prime+M\prime+N\prime} F_{mi}$ is the sum of the forces at break for the Q'+M'+N' threads of an external strand in Newtons;
- Cste = 1500 N.mm$^{-2}$;
- Sc is the compacted surface area in mm$^2$ with Sc=[Q ×(d1/2)$^2$+N × (d3/2)$^2$ + L × (Q' ×(d1'/2)$^2$+ M' × (d2'/2)$^2$ + N' × (d3'/2)$^2$)] × π and
- Se is the surface area of the cord (50) in mm$^2$ with Se = π × (D/2)$^2$, D being the diameter of the cord in mm;

wherein the external layer (CE) of the cord is desaturated so that the inter-strand distance E of the external strands (TE), defined, on a section of the cord perpendicular to the main axis of the cord (50), as being the shortest distance separating, on average, the circular envelopes in which two adjacent external strands (TE) are inscribed, is greater than or equal to 30 μm.

2. Cord (50) according to the preceding claim, wherein SL ≤ 37 500 MPa.mm and preferably SL ≤ 35 000 MPa.mm.

3. Cord (50) according to any one of the preceding claims, wherein SL ≥ 25 000 MPa.mm and preferably SL ≥ 27 500 MPa.mm.

4. Cord (50) according to any one of the preceding claims, wherein $Ec$ ≥ 0.47 and preferably $Ec$ ≥ 0.48.

5. Cord (5) according to any one of the preceding claims, wherein $Ec$ ≤ 0.65 and preferably $Ec$ ≤ 0.55.

6. Cord (50) according to any one of the preceding claims, wherein of is greater than or equal to 0° and preferably greater than or equal to 3°.

7. Cord (50) according to any one of the preceding claims, wherein of is less than or equal to 25° and preferably less than or equal to 20°.

8. Cord (50) according to any one of the preceding claims, wherein $\alpha t$ is greater than or equal to 0° and preferably greater than or equal to 3°.

9. Cord (50) according to any one of the preceding claims, wherein $\alpha t$ is less than or equal to 20°, preferably less than or equal to 15° and more preferably less than or equal to 10°.

10. Cord (50) according to any one of the preceding claims, wherein the penetration coefficient for the cord Cp is greater than or equal to 0.60 and preferably greater than or equal to 0.70.

11. Cord (50) according to any one of the preceding claims, extracted from a polymer matrix with one of the extraction methods described in the description.

12. Reinforced product (100), **characterized in that** it comprises a polymer matrix (102) and at least one cord (50) according to any one of Claims 1 to 10.

13. Tyre (10), **characterized in that** it comprises at least one cord (50) according to any one of Claims 1 to 10 or a reinforced product according to Claim 12.

# Fig.1

# Fig.2

Fig.3

Fig.4

Fig.5

Fig.6

Fig.7

## RÉFÉRENCES CITÉES DANS LA DESCRIPTION

**Documents brevets cités dans la description**

- WO 2018115727 A
- FR 2419181
- FR 2419182